# EUROPEAN PATENT SPECIFICATION

(11) **EP 2 536 558 B1**
(45) Date of publication and mention of the grant of the patent: **24.10.2018**
(21) Application number: 11745149.2
(22) Date of filing: 16.02.2011
(51) Int. Cl.: F16L 59/02, B65H 35/04, B65H 45/101, B65H 45/103, B65H 45/28, B29C 53/06, B26D 3/08, B65B 63/02, B65B 63/04, D04H 1/76, D04H 1/58, D04H 1/4218

(54) **A METHOD OF LAYERING A MAT OF FIBROUS INSULATION MATERIAL, AND A LAYERED MAT OF FIBROUS INSULATION MATERIAL**
VERFAHREN ZUM SCHICHTEN EINER FASERIGEN ISOLIERMATTE, UND SCHICHTWEISE ANGEORDNETE FASERIGE ISOLIERMATTE
PROCÉDÉ DE STRATIFICATION D'UN TAPIS ISOLANT FIBREUX, ET TAPIS ISOLANT FIBREUX STRATIFIÉ

(30) Priority: 19.02.2010 US 708658
(43) Date of publication of application: 26.12.2012
(73) Proprietor: Certainteed Corporation, Valley Forge, PA 19482 (US)
(72) Inventor: KNAPP, Kenneth, D., Norristown, PA 19401 (US); RUCKER, Alexander, M., Conshohcken, PA 19428 (US)
(74) Representative: Saint-Gobain Recherche
(86) International application number: PCT/US2011/025014
(87) International publication number: WO 2011/103140

(56) References cited:
- EP-A2- 1 231 335
- US-A- 1 656 828
- US-A- 3 979 245
- US-A- 5 626 954
- US-A- 5 981 024
- US-B1- 6 823 571

## Description

### FIELD OF THE INVENTION

The present invention is related to a layered mat of fibrous insulation material and a method of layering a mat of fibrous insulation material.

### BACKGROUND OF THE INVENTIONS

DE 3444897 assigned to BayerAG teaches lapped compression of mineral wool mats into a bundle.

Other references that described lapping packaging equipment are U.S. 1, 656,828 and U.S. 2,684,107. In addition, Owens Corning Fiberglass previously produced what they called "batt/roll" package, whereby individual batts were overlapped in a line (approximately 8 inches (20,3 cm) of 1 batt covering the top of the next), so that they could be rolled and packaged similarly to a continuous roll. When the Owens Corning Fiberglass package was opened, the customer unrolled a series of individual batt pieces Residential and light commercial building insulation rolls are insulation pieces, having standard single widths, from about 11 inches (27,9 cm) to about 24 inches (60,9 cm), and which have standard lengths, preferably, about 18 feet (5,5 m) to about 71 feet (21,6 m), and further, which are rolled up under some level of compression. These rolls could be wound with minimum compression and undergo secondary compression for packaging, or could be directly wound up with a higher, final compression, which could be used for the final individual package to form spiral rolls of such standard lengths. They differ from insulation batt pieces which might have widths in the same range, but whose lengths are much shorter, typically 42" (106,6 cm) to about 106" (269,2 cm). A residential building insulation roll package typically has one, perhaps two pieces in a single package, whereas a typical batt package might have 5 to 40 pieces, depending on its thickness and thermal R-value. The diameter of a roll of insulation from its primary packaging machine is typically between 1.25 feet (38,1 cm) and 2.5 feet (76,2 cm). These rolls are typically manufactured without any facing (referred to as unfaced), or with one of a number of available types of vapor retarder facings (referred to as faced). Such rolls may be compacted by applying a generally high amount of compression while being tightly rolled up and prepackaged in a loose fitting plastic film bag, such that the bag and its contents undergo some further compaction by packaging the bag in a unit package, a larger bag, or they might, for example, be stretch wrapped with a plastic film designed to provide some compression, but mostly to take a group of rolls and form a unit package, typically containing from 6 to 18 individual roll packages. Alternatively, such rolls may be rolled up first, at a lower level of compression and then further compacted while being prepackaged in tight fitting plastic. These individual packages, which may be round or oval in shape, are then packaged in unit bags providing some additional compression with multiple straps adding compression, or by stretch wrapping with plastic film as previously noted.

Traditional rolling of fibrous insulation creates areas of tension and compression in the rolled fibers during the rolling process, which often leads to fiber breakage and damage to the unrolled insulation product. Such damage may negatively affect the insulation properties of the insulation product. This is usually due to a loss of thickness recovery of the package, and can also cause a loss of the insulation's thermal value. Further, it can create additional dust in the product, which is a nuisance to the installer. One method used to overcome some of the fiber breakage caused by tensile forces is "lapping".

While the above processes and systems described improved fiber glass insulation products and equipment for their packaging, there still remains a need for products and processes which aid in folding, reduce fold creases and stresses at the fold, and allow for separation of mats for customer applications, if desired. There further remains a need for the capability of a higher level of secondary compression of mineral wool bundles (unitization of packages), as well as adjusting the fold length during the lapping process.

EP 1 231 335 A2 discloses a method of layering a mat of fibrous insulation material comprising polymer fibres.

### SUMMARY OF THE INVENTION

A method of layering a mat of fibrous insulation material is provided, by cutting partially through a thickness of a mat of fibrous insulation material to provide a series of transverse cuts spaced apart along a continuous length of the mat; layering said mat into a series of lapped insulation layers connected in a sinuous configuration, wherein the transverse cuts extend along respective ends of the lapped insulation layers; and folding the sinuous configuration along the transverse cuts at ends of the lapped insulation layers, while the transverse cuts reduce creasing of the mat.

A layered mat of fibrous insulation material, is provided by a series of transverse cuts spaced apart along a continuous length of a mat of fibrous insulation material, wherein the transverse cuts extend partially through a thickness of the mat to provide a layered mat having a series of lapped insulation layers connected in a sinuous configuration, wherein the transverse cuts extend along respective ends of the lapped insulation layers; and the sinuous configuration is folded along the transverse cuts at ends of the lapped insulation layers, while the transverse cuts reduce creasing of the mat.

The scope of the present invention is solely defined by the appended claims.

A method of making a lapped fibrous insulation material is provided, which is not covered by the invention and the steps of: conveying a cured, binder-impregnated mat of fibers, the mat having a thickness, a longitudinal length and transverse ends. The method further includes a step of providing a plurality of spaced, transverse cuts through at least a portion of the thickness of the mat, and lapping the mat of fibers in opposite directions to fold the mat into a generally sinuous configuration having a series of continuous layers, wherein at least one of said transverse cuts in aligned with at least one of said fold regions for assisting in making the mat of fibers easier to fold and for reducing the stresses at the fold during the lapping step.

It is preferred that all of the transverse cuts align with the folds to provide the best compression improvement, although cuts could, additionally or alternatively, be at other locations. These cuts become more important to relieve the stresses in the insulation at the bends in the folded insulation as the density of the product increases. For example, the stresses at the folds for the lightest of densities in the range of about 0.4 lbs/cu ft (6,41 kg/m³) are much lower than those for products at about 1.5 lbs/cu ft (24,02 kg/m³). Thus, providing a lapped roll having these cuts presents an improvement to previous work with lapped insulation rolls which did not have strategically placed cut(s).

In further embodiments of the present invention, lapped insulation products with strategically placed cuts made of fiberglass or mineral wool, are folded in alternating motion back and forth, to allow for higher packaging compression, thus improving logistic costs and/or providing the opportunity to change the amount of fiberglass material in the product to achieve the same product performance characteristics, while reducing the manufacturing cost.

The lapped fibrous insulation material of the present invention can also be provided in a single type of package, with one product that may be used to apply a single extended length of insulation (the equivalent of what is commonly referred to as a roll), or be an extended length of product which is perforated or cut in such a way as to easily provide separated, smaller equal lengths, or unequal lengths, commonly referred to as batt insulation. The preferred process would allow for the lapping width to be changed, enabling for example, the cuts to always be at the folds and for the cuts to coincide with various standard wall cavity heights of 8' (20,3 cm), 9' (22,8 cm), 10' (25,4 cm) or even 12' (30,4 cm), or a combination of these heights. One could also hold the lapping width constant, whereby the cuts in the mat could be located along one or more at the natural folds, or at periodic intervals throughout the mat length, or both. This will allow a customer to buy one package for multiple purposes. For example, they could elect to easily separate the roll into pieces (batts) for use in insulating wall cavities, or they could leave the roll as a unit and unroll it as a single piece for putting insulation in an attic. The lapped rolls of the present invention are damaged less than traditionally rolled insulation products when subject to parallel compression, that is, compression which is directed roughly parallel to the plane of the continuous layers in the lapped roll. When such a force is applied to a traditional roll, some fibers are compressed while others are subject to tensile loads, damaging them. The present lapped rolls also can be processed with similar equipment used for compression packaging of traditional individual batts where a series of individual pieces might in one version, be collected in a stack, vertically compressed, then horizontally ejected into a tight fitting polymer bag.

Finally, the lapped rolls of the present invention can lead to better truck loading efficiency, since the package will generally have a more rectangular configuration and a higher compression than a traditionally rolled insulation product. In head to head tests between the lapped rolls of the present invention and traditionally rolled batts, the present lapped rolls had about a 61% higher compression after unitization and had an approximately 18% better thickness recovery following unpackaging. The lapped fibrous insulation material of the present invention enables thicker and/or denser insulation materials to be lapped into lapped rolls with minimal damage for the first time. The present invention of employing one or more of spaced transverse cuts minimizes apparent creasing and damaged fibers to enable lapped rolls to be prepared from insulation material having an R-value of at least about R-25, or a thickness of at least about 8 inches (20,3 cm), and having a density of about 0.4-1.5 lbs/ft³ (6,41 - 24,02 kg/m³) or any thickness of fibrous insulation material which has a density of about .60 lbs/ft³ (9,61 kg/m³), or greater.

In a further embodiment of the present invention, a lapped fibrous insulation material is provided which includes a cured, binder-impregnated mat of fibers, the mat having a thickness, a longitudinal length and transverse ends. The insulation further has a plurality of spaced, transverse cuts through at least a portion of the thickness of the mat. These transverse cuts can be continuous across the width of the mat at varying depths within a given product thickness, or be intermittent across the width of the mat at varying depths within a given product. For faced or unfaced products, cuts could even go to the entire depth if they perforate the facing or the mat and are intermittent. If the cuts are continuous across the width of the mat, then the depth can vary depending on product thickness and density up to about ¼" (0,6 cm) remaining uncut of the full thickness.

The mat is typically lapped in opposite directions to fold the mat of fibers into a generally sinuous configuration having a series of continuous layers connected by folded regions, wherein at least one of the transverse cuts is aligned with at least one of the folded regions, which helps to make the mat of fibers easier to fold during a packaging process. As noted above, these cuts can be aligned with one or more folds to provide the best compression improvement, although the cuts can also be located elsewhere. The folded region or regions with cuts also ensures uniformity and helps maintain the product integrity.

It should be noted that while this invention is useful for residential and light commercial building insulation, it is easily transferrable to any other type of rolled insulation. These applications could include, but are not limited to, basement wall insulation, commercial blanket insulation, standard duct wrap (SDW) insulation, metal building insulation (MBI) etc. These products can range in width from 11" (27,9 cm) to 96" (2,43 m) in lengths from 18' (5,48 m) to 250' (76,20 m) and in thicknesses from 1.5" (3,8 cm) to 12" (30,4 cm) for building insulation. They can be unfaced or faced with any one of a number of materials typically used in the insulation industry. They can be provided in 24-120 inch (60,9 - 304,8 cm) increments for fitting various wall, ceiling and floor spaces. **BRIEF DESCRIPTION OF THE DRAWINGS**

The accompanying drawings illustrate preferred embodiments of the invention, as well as other information pertinent to the disclosure, in which:
FIG. 1 is a partial side-elevation view of a proposed lapping operation in which product from a production line is swung back and forth to layer it within a compression chamber;
FIG. 2 is a side-elevation view of a second proposed lapping operation in which product from a production line is directed to a traveling head which moves back and forth to layer product within a compression chamber;
FIG. 3 is a side-elevation view of the lapped fiberglass insulation mat being compressed prior to then being inserted within a plastic packaging layer;
FIG. 4 is a front and side perspective view of a packaged lapped roll; and
FIG. 5 is a front and side perspective view of a unit package containing four individual bags of lapped rolls.

### DETAILED DESCRIPTION

Residential and light commercial building insulation batts and/or rolls are usually standard lengths of a mat of insulation material. First, the mat is manufactured in continuous lengths, and usually has standard widths, typically for batts in the width range of about 11 inches (27,9 cm) to about 24 inches (60,9 cm). Traditional batts are manufactured in lengths typically ranging from 42 to 106 inches (1,06 - 2,69 m), whereas traditional rolls are manufactured in lengths typically ranging from 18 to about 71 feet (5,48 - 21,64 m). Thicknesses for these products typically range from 2 ½ to 12 inches (6,4 - 30,5 cm). The fibers are often bound together with a thermosetting binder, such as a phenol -formaldehyde binder. The insulation is, typically, either faced or unfaced. Facings can be kraft, FSK (foil/scrim/kraft), PSK (poly/scrim/kraft) kraft or nylon such as is used for CertainTeed's DryRight. Some facings can be perforated, such as perforated FSK. The R value is printed on both unfaced and faced insulation in most cases. Facings are adhered with a variety of materials in a variety of ways. Vapor retarding facing, in the form of a flexible film of water vapor retarding material, can be applied on the continuous length insulation. In one embodiment, the facing comprises a kraft paper layer, which may be coated with a bituminous adhesive material, such as, asphalt, or, a water based adhesive, such as, acrylic or polyvinyl acetate, or a hot-melt adhesive. The continuous length insulation mat can be manufactured, either with the facing, or without the facing. The facing can be repeatedly marked with information, which can describe an R-Value of the insulation product, as well as, a brand name and other useful information.

Continuous insulation mats are usually divided into standard lengths corresponding to typical batts or rolls. A lapped roll is similar to typical insulation rolls, with a typical roll width and length, but is continuously folded in a back and forth lapping operation as opposed to being spiral wound. Relatively long batts are normally doubled back and folded to fit in shorter bags. The folded length of the mat during the lapping operation can typically vary from 24-60 inches (0,61 - 1,52 m). Residential and light commercial batts are essentially the same products, with perhaps some minor physical characteristic product and packaging variations.

Insulation material intended for thermally and acoustically insulating buildings typically has a low glass fiber density, such as from about 0.4 to 1.5 pounds per cubic foot (6.4 x kg/m³ to 24 x kg/m3), which has a prescribed R-value and thickness at such fiber density. Lapped rolls like standard batts and rolls, of such insulation are compressed and compacted to expel air. While in a compressed or compacted state, the lapped rolls are unit packaged as the insulation products in corresponding bags. For example, the length of a typical bag is about 50 to 52 inches (1,27 - 1,32 m), which contains lapped rolls of insulation products that have been compacted in thickness, and/or lapped, so as to fit in a bag. A single bag may contain one lapped roll, or a plurality of lapped rolls stacked one on another. Prior to installation of the insulation in a building, unit and individual packaging materials are removed.

These single bags are then collated and packaged under additional compression into unit bags or stretch wrapped bundles which allows the compacted fibers of the insulation products to expand or "fluff up" to their prescribed R-value rated recovered thickness.

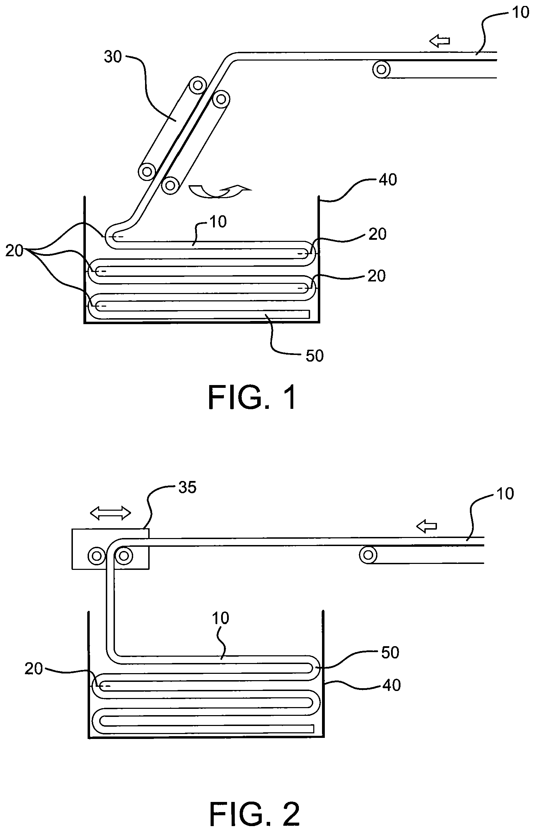

With reference to the Figures, and more particularly to FIGS. 1-5 thereof, there is shown a method of making a lapped fibrous insulation material, equipment for this method, and the resulting product. A continuous mat of fibers 10 of FIG. 1 is disposed from a production line and is delivered to a short swinging conveyor 30 which laps the mat of fibers 10 back and forth into a generally sinuous configuration within a compression chamber 40. The lapped roll 50 preferably includes a plurality of cuts 20 disposed strategically in a transverse direction through at least a portion of the thickness of the mat of fibers 10 of the lapped roll 50.

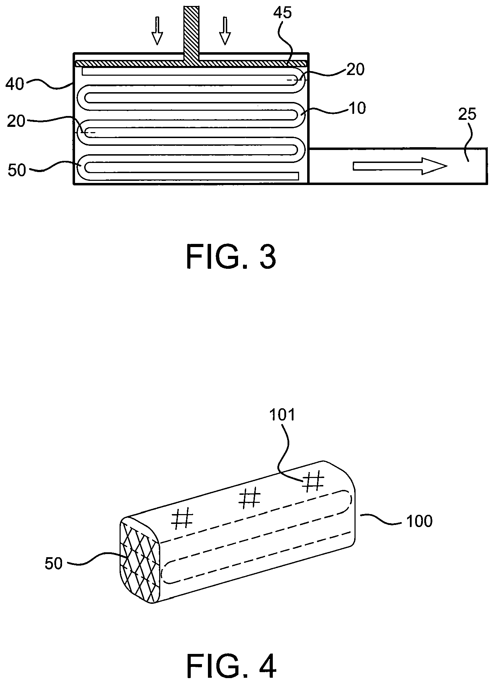

In an alternative method of a lapping operation, shown in FIG. 2, a traveling dispensing head 35 collects the mat of fibers 10 from the production line and laps the mat of fibers 10 back and forth to layer said mat of fibers 10 into a generally sinuous configuration within the compression chamber 40. As shown in FIG. 3, a piston 45 can be used to compress the lapped roll 50 in a direction which is generally perpendicular to the nominal plane of a first of a series of continuous layers disposed within the compression chamber 40. While this is one means by which the lapped roll can be compressed into a package, it is understood that many such machine types can accomplish this type of compression. For example, see U.S. Pat. Nos. 2,684,107; 1,656,828 and DE 3,444,897. See also machines for folding, delivering and de-stressing insulation, U.S. Pat. Nos. 4,218,962; 4,439,175; 4,840,013; 5,704,191; 5,631,061; and 4,805,374. The compressed lapped roll 50 is then transported to a wrapping station 25 where thin polymeric material, such as polyethylene or polypropylene film 101, is used to package the compressed lapped roll 50. Alternatively, the lapped roll 50 can be inserted into a first bag, compressed, and then unitized (joined with other bags) in a larger bag. A final example of an individual packaged lapped roll 100 in its plastic film 101 is shown in FIG. 4.

While the above mentioned patents reference lapping insulation or fibrous products generally, such prior art procedures left visual, large creases caused by folding the fibrous material. These creases were unsightly and potentially affect the insulation quality of the product since they reflect potential damage to the fibers and loss of R-value, and thickness recovery upon opening for use. The present invention employs cuts 20, such as continuous, intermittent (spaced) or partial continuous cuts through the insulation mat of fibers 10. The partial transverse cuts 20 in the long mat of fibers 10 can be intermittent or continuous, and be made at various depths, from partial to full thickness. The partial cuts 20 are traditionally formed on line by an insulation chopper, but there are several methods for creating a partial cut in a mat of fibers 10. The cuts 20 are desirably performed prior to the lapping step. One preferred method of cutting is generally referred to as "skip-chop" cuts. Skip-chops are preferably implemented transversely across the mat 10 at 48 inch (1,22 m), 93 inch (2,36 m), 96 inch (2,44 m), or 105 inch (2,66 m) increments, but can conveniently be done in lengths anywhere from 36-120 inches (0,91 - 3,04 m) or more. They go through the entire depth of the mat, perforating the bottom face and are used primarily when making traditional rolls of insulation having this special configuration. There are several reasons for the cuts 20 or skip-chops. First, the cut 20 can be torn apart by the customer at the desired length, based on the needs of the insulation job. Second, the cuts 20 replace a large continuous piece with a more attractive break in the material. Third, the cut site is easier to fold during the packaging process and will insure uniformity and maintain product integrity during packaging and storage. The use of transverse cuts as described in this invention in connection with lapping the mat for packaging will eliminate large creases, associated with previous lapped roll packaging which are visual and obvious to the customer, while simultaneously permitting the customer to tear the product by hand or easily with a knife at set lengths which are conventional for residential and commercial buildings. Additionally, the process by which the partial, continuous, or intermittent cuts are formed, allows for the installation of the fiberglass product so that there is no negative impact on performance characteristics, such as loss in R-value or recovered thickness. While there are insulation batts and rolls currently available with transverse perforations, none of these products currently utilize lapped packaging or coordinate the perforations with crease lines.

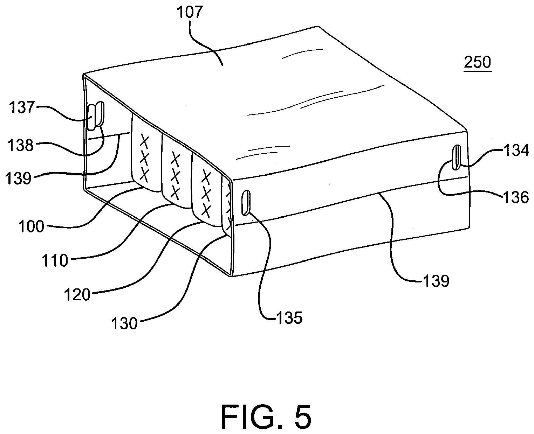

In addition to individually packaged lapped rolls 100, lapped roll 100 could be packaged together with similar lapped rolls 110, 120 and 130, within a flexible sleeve 107, as shown in FIG. 5. The flexible sleeve 107 has opposite ends and multiple handles 138, 135 and 136 made from cut-out portions of the flexible sleeve 107, for example. The handles 135, 136 and 138 are made by punching or cutting out a portion of the flexible sleeve 107 to leave cut-outs or tags 137 or 134, for example. The flexible sleeve 107 includes portions which extend beyond the package lapped rolls 100, 110, 120 and 130. The flexible sleeve 107 may include a seam 139 which permits it to fold in a compressed state. Another handle, not shown, is provided in the corner of the flexible sleeve, not illustrated. Such handles are accessible for grasping, even when the side of the flexible sleeve 107 is covered. The individually packaged lapped rolls 100, 110, 120 and 130 can be further compressed to fit within the flexible sleeve 107 in the final unit package 250.

### EXAMPLE

Preliminary tests were conducted for R13 product and compared to R13 Mini Rolls (Mini Rolls are a common terminology used to refer to rolls produced for retail outlets which are usually 15 inches (38,1 cm) wide by 32 feet (9,75 m) in length) as a control sample at CertainTeed's Mountaintop, PA facility in April of 2009. Rolls of R13 product were loosely wound in the roll-up machine. Some were then folded in a lapping method and packaged through a traditional batt packaging machine as trial samples, while others were placed into the same compression bagger as round or concentric shaped rolls and packaged as control samples. This preliminary test indicated the trial lapped rolls had some thickness recovery value improvement over standard roll production. Lapped and standard rolls were again tested for recovery after high compression ratios. This time the testing was more comprehensive, with trials at CertainTeed's Kansas City, KS plant and test results taken both at the time of manufacture and 44 days later to determine the impact of aging on the product from the alternative method. R13 product was again used for the comparative evaluation. Some material was removed from the production line prior to be rolled in the rolling machine. This material was then lapped into a compression bagger, followed by the unitization of multiple packages for additional compression. At the same time, control samples were rolled in the traditional rolling machine, compression packaged and then unitized via the traditional method.

The following Table 1 includes data from compression testing lapped and standard rolls, and includes compression ratios (referred to in Table 2 as CR) for individual rolls as units in a package, and the recovery one day after unitizing. Aged testing at CertainTeed's Blue Bell, PA Technical Center was done for the control and trial products 44 days after manufacture. Both dead pin and drop fluff testing was done. Dead pin is an internal test method for determining thickness recovery. It is a common practice in the insulation industry. Basically, the package is opened and the roll allowed to unroll. After waiting about 5 minutes, the thickness is measured at various points throughout the roll, without subjecting the roll to any external movement or other handling. The results are generally good if the measurement is at least 100% of the nominal thickness recovery. Drop Fluff recovery on the other hand, is an ASTM method C167, whereby pieces are cut from the roll after about 15 minutes and dropped from a height of about 18" (45,7 cm) twice on each of the long edges of the product. The thickness measurements are then taken. This is the testing that is usually done at centralized labs and is reported to be representative of what customers would see upon opening the package and handling the product for installation. Unitization for the lapped rolls was obtained by taking individual packages, laying them side by side in groups of 5 packages, and compressing them just like batt packages into a unit bag. Unitization for the control roll packages was done by collecting a series of individual packages and stretch wrapping them into the standard bundle.

At the time of manufacture for the control, the dead pin was 3.49" (8,9 cm). The unit compression ratio was 3.7 to 1.0. For the trial lapped rolls, the dead pin was 3.88" (9,9 cm). The unit compression ratio was 6.0 to 1.0.

**TABLE 1: Time Of Manufacture DATA**

| **Trial Data** | | |
|---|---|---|
| | **Lapped Rolls** | **Standard Rolls** |
| **Individual Rolls** | | |
| Length | 80 ft / 24.4 m | 32 ft / 9.75 m |
| Compression Ratio | 3.7 | 3.6 |

| **Units** | | |
|---|---|---|
| # Packages | 5 | 18 |
| Compression Ratio | 6.0 | 3.7 |

| **Recovery** | | |
|---|---|---|
| Dead Pin | 3.88" (9,9 cm) | 3.29" (8,4 cm) |

| | | |
|---|---|---|
| All data are averaged. Trial conducted June 10, 2009 in Kansas City, KS | | |

The time of manufacture data show an 18% improvement in dead pin thickness at a 62% increased level of compression. As the data indicates, lapped rolls were capable of undergoing 62% more compression after unitization than standard rolls. These data are a good indication of increased shipping efficiency of lapped rolls over standard rolls, which will enable more product to be delivered in a single truck. The data in Table 1 also show that the lapped rolls had 18% better recovery, indicating that they fluffed up, or recovered, without any additional handling to their original shape better than standard rolls, after being removed from the package. This is likely due to the fact that lapped rolls experience parallel compression when stacked as a unit, and resist damage, while standard rolls experience tensile loads which can break the fiber and prevent a fuller recovery.

In addition to the above, lapped rolls and standard rolls were tested for recovery after 44 days of storage. The results of this test are shown in Table 2, below.

**TABLE 2: Aged Recovery Data (44 days)**

| **Lapped Roll Trial Data** | | | | | | |
|---|---|---|---|---|---|---|
| **R13 Product** | | | | | | |
| **Condition** | | **CR-Bag** | **CR-Unit** | **Aged Recovery (inches)** | **Recovery % Control** | **CR % Control** |
| Control | Dead Pin | 3.7 | 3.66 | 3.49 [8,9 cm] | | |
| | Fluffed | 3.7 | 3.66 | 4.09 [10, 4 cm] | | |
| 48" Lapped | Dead Pin | 3.7 | 5.90 | 3.79 [9,6 cm] | 108.6% | 161% |
| (1,22 m) | Fluffed | 3.7 | 5.90 | 4.36 [11,1 cm] | 106.6% | 161% |
| 24"(60,9 cm) | Dead Pin | 3.7 | n/a | 4.14 [10,5 cm] | 118.6% | 100% |
| Lapped* | Fluffed | 3.7 | n/a | 4.59 [11,7 cm] | 112.2% | 100% |
| 24"(60,9 cm) | Dead Pin | 4.6 | n/a | 3.69 [9,4 cm] | 105.7% | 124% |
| Lapped** | Fluffed | 4.6 | n/a | 4.05 [10.3 cm] | 99.0% | 124% |

| | | | | | | |
|---|---|---|---|---|---|---|
| * Single roll produced at standard 32' (9,75 m) length and lapped at 24" (61 cm) folds, packaged in standard Mini Roll bag. Not Unitized. ** Single roll produced at 40' (12,2 m) length and lapped at 24" (60,9 cm) folds, packaged in standard Mini Roll Bag. Not Unitized. | | | | | | |

As these data reveal, lapped rolls showed an 8.6% better dead pin and 6.6% better drop fluff recovery after 44 days than standard rolls, and were able to be compressed 61% more than standard rolls.

A proposed fibrous insulation material not forming part of the present invention may be inorganic fibers, polymeric fibers or a combination thereof. Preference is made for glass fibers. In an important aspect of this invention, transverse cuts 20 are lined at a plurality of the folded regions 10 of the mat, and are more preferably disposed at about 24-120 inch (0,61 - 3,05 m) increments. For wall insulation, the perforation or partial cuts at intervals of the product can be designed to provide individual batts of approximately 93 inches (2,36 m) or about 8 feet (2,44 m) in wall height (about 7 feet (2,13 m), 9 inches (22,9 cm) of space between the upper plate and lower plate or sill) for standard residential walls, or approximately 105 inches (2,67 m) or about 9 feet (2,74 m) in wall height for commercial walls and ceilings (about 8 feet 9 inches (2,67 m) of space between the upper plate and lower plate or sill). The R value of such products is typically in the range of about R-8 through about R-22. The perforations can also be made (alternatively or cumulatively) at about 48 inches (1,22 m) or about 96 inches (2,44 m) for certain applications. For example, if the perforations or cuts are made at every 48 inches (1,22 m) or so, two batts can be used for a 96 inch (2,44 m) length product. If a perforation is made about every 46 ½ inches (1,18 m) or so, two batts can be linked together for a 93 inch (2,36 m) product.

It has been observed that the perforated cuts 20, or partial cuts, help in the recovery of the product when aligned with the folds of the lapped roll 50, as shown in FIGS. 1-3. While these cuts 20 can be continuous or intermittent, their depth can vary all the way to the facing, if a facing is provided, and even perforate through the facing so that the entire product is easy to tear by hand. Generally, in un-faced product, such as insulating product of about 2 ½ (6,4 cm) in thickness, a partial, intermittent or continuous cut about half way through the thickness of the product can be made for ease of bending during packaging, although a knife is usually required to completely tear the product apart in the field.

It has also been observed that in the case of R-30 product of about 10 inches (25,4 cm) in thickness or greater, lapping is generally not practical without the use of aligning cuts 20 with the folded regions, since the product does not fold right (it is too bulky) in the compression chamber 40. Accordingly, this invention permits the lapping of relatively thick insulation product, greater than about 8 inches (20,3 cm) thick, or an R-value of at least about R-25, which has previously only been able to have been rolled for packaging, or any thickness of fibrous insulation material which has a density of about .60 lbs/ft³ (9,61 kg/m³)³ or greater.

## Claims

1. A method of layering a mat of fibrous insulation material (10) comprising fiberglass or mineral wool, wherein the method comprises:
cutting partially through a thickness of a mat of fibrous insulation material (10) comprising fiberglass or mineral wool to provide a series of transverse cuts (20) spaced apart along a continuous length of the mat;
layering said mat into a series of lapped insulation layers connected in a sinuous configuration, wherein the transverse cuts (20) extend along respective ends of the lapped insulation layers; and
folding the sinuous configuration along the transverse cuts (20) at ends of the lapped insulation layers, while the transverse cuts reduce creasing of the mat.

2. The method of claim 1, wherein said mat of fibrous insulation material (10) comprising fiberglass comprises glass fibers impregnated with a binder.

3. The method of claim 1, wherein said transverse cuts (20) are intermittent skip-chop cuts.

4. The method of claim 1, comprising:
dispensing said mat (10) through a short conveyor swinging a back and forth to layer said mat into said series of lapped insulation layers connected in a sinuous configuration.

5. The method of claim 1. comprising:
compressing said mat of fibrous insulation material (10) within a unit package.

6. A layered mat of fibrous insulation material (10) comprising fiberglass or mineral wool, wherein the layered mat has a series of lapped insulation layers connected in a sinuous configuration,
wherein said mat comprises:
a series of transverse cuts (20) spaced apart along a continuous length of a mat of fibrous insulation material comprising fiberglass or mineral wool, wherein the transverse cuts extend partially through a thickness of the mat to provide the layered mat having a series of lapped insulation layers connected in a sinuous configuration, wherein the transverse cuts (20) extend along respective ends of the lapped insulation layers; and the sinuous configuration is folded along the transverse cuts at ends of the lapped insulation layers, while the transverse cuts reduce creasing of the mat.

7. The mat of claim 6, wherein said mat (10) comprising fibreglass comprises glass fibers impregnated with a binder.

8. The mat of claim 6, wherein said transverse cuts (20) are intermittent skip-chop cuts.

9. The mat of claim 6, wherein said layers are compressed in a unit package.

## Patentansprüche

1. Verfahren zum Schichten einer Matte aus faserigem Isoliermaterial (10), das Glasfaser oder Mineralwolle umfasst, wobei das Verfahren umfasst:
teilweise Durchtrennen einer Dicke einer Matte aus faserigem Isoliermaterial (10), das Glasfaser oder Mineralwolle umfasst, um eine Reihe von quer verlaufenden Einschnitten (20) zu schaffen, die entlang einer fortlaufenden Länge der Matte beabstandet sind;
Schichten der Matte zu einer Reihe von überlappenden Isolierschichten, die in einer gewundenen Anordnung verbunden sind, wobei sich die quer verlaufenden Einschnitte (20) entlang jeweiliger Enden der überlappenden Isolierschichten erstrecken; und
Falten der gewundenen Anordnung entlang der quer verlaufenden Einschnitte (20) an den Enden der überlappenden Isolierschichten, während die quer verlaufenden Einschnitte die Knitterbildung der Matte verringern.

2. Verfahren nach Anspruch 1, wobei die Glasfaser umfassende Matte aus faserigem Isoliermaterial (10) umfasst
Glasfasern, die mit einem Bindemittel imprägniert sind.

3. Verfahren nach Anspruch 1, wobei die quer verlaufenden Einschnitte (20) unregelmäßige rautenförmige Einschnitte sind.

4. Verfahren nach Anspruch 1, umfassend:
Ausgeben der Matte (10) durch eine kurze Fördervorrichtung, die hin und her schwingt, um die Matte zu der Reihe von überlappenden Isolierschichten zu schichten, die in einer gewundenen Anordnung verbunden sind.

5. Verfahren nach Anspruch 1, umfassend:
Zusammenpressen der Matte aus faserigem Isoliermaterial (10) in einer Einzelverpackung.

6. Geschichtete Matte aus Glasfaser oder Mineralwolle umfassendem faserigen Isoliermaterial (10), wobei die geschichtete Matte eine Reihe von überlappenden Isolierschichten aufweist, die in einer gewundenen Anordnung verbunden sind,
wobei die Matte umfasst:
eine Reihe von quer verlaufenden Einschnitten (20), die entlang einer fortlaufenden Länge einer Matte aus Glasfaser oder Mineralwolle umfassendem faserigem Isoliermaterial beabstandet sind, wobei sich die quer verlaufenden Einschnitte teilweise durch eine Dicke der Matte erstrecken, um die geschichtete Matte mit einer Reihe von überlappenden Isolierschichten bereitzustellen, die in einer gewundenen Anordnungverbunden sind, wobei sich die quer verlaufenden Einschnitte (20) entlang jeweiliger Enden der überlappenden Isolierschichten erstrecken und die gewundene Anordnung entlang der quer verlaufenden Einschnitte an den Enden der überlappenden Isolierschichten gefaltet wird, während die quer verlaufenden Einschnitte die Knitterbildung der Matte verringern.

7. Matte nach Anspruch 6, wobei die Glasfaser umfassende Matte (10) Glasfasern umfasst, die mit einem Bindemittel imprägniert sind.

8. Matte nach Anspruch 6, wobei die quer verlaufenden Einschnitte (20) unregelmäße rautenförmige Einschnitte sind.

9. Matte nach Anspruch 6, wobei die Schichten in einer Einzelverpackung zusammengepresst sind.

## Revendications

1. Procédé de disposition en couches d'un matelas de matériau d'isolation fibreux (10) comprenant de la fibre de verre ou de la laine minérale, le procédé consistant à :
découper partiellement à travers une épaisseur d'un matelas de matériau d'isolation fibreux (10) comprenant de la fibre de verre ou de la laine minérale pour obtenir une série d'encoches transversales (20) espacées le long d'une longueur continue du matelas ;
disposer ledit matelas en une série de couches d'isolation superposées, reliées selon une configuration sinueuse, les encoches transversales (20) s'étendant le long des extrémités respectives des couches d'isolation superposées ; et
plier la configuration sinueuse le long des encoches transversales (20) aux extrémités des couches d'isolation superposées, tandis que les encoches transversales réduisent le froissement du mat.

2. Procédé selon la revendication 1, dans lequel ledit matelas de matériau d'isolation fibreux (10) comprenant de la fibre de verre comprend des fibres de verre imprégnées d'un liant.

3. Procédé selon la revendication 1, dans lequel lesdites encoches transversales (20) sont des encoches obtenues par une découpe intermittente.

4. Procédé selon la revendication 1, comprenant la distribution dudit matelas (10) à travers un convoyeur court oscillant d'avant en arrière pour disposer ledit matelas en ladite série de couches d'isolation superposées, reliées selon une configuration sinueuse.

5. Procédé selon la revendication 1, comprenant la compression dudit matelas de matériau d'isolation fibreux (10) à l'intérieur d'un ensemble unitaire.

6. Matelas disposé en couches de matériau d'isolation fibreux (10) comprenant de la fibre de verre ou de la laine minérale, le matelas en couches comportant une série de couches d'isolation superposées, reliées selon une configuration sinueuse,
ledit matelas comprenant :
une série d'encoches transversales (20) espacées le long d'une longueur continue d'un matelas de matériau d'isolation fibreux comprenant de la fibre de verre ou de la laine minérale, les encoches transversales s'étendant partiellement à travers une épaisseur du matelas pour donner le matelas disposé en couches, comportant une série de couches d'isolation superposées reliées selon une configuration sinueuse, les encoches transversales (20) s'étendant le long des extrémités respectives des couches d'isolation superposées ; et la configuration sinueuse étant pliée le long des encoches transversales aux extrémités des couches d'isolation superposées, tandis que les encoches transversales réduisent le froissement du mat.

7. Matelas selon la revendication 6, dans lequel ledit matelas (10) comprenant de la fibre de verre comprend des fibres de verre imprégnées d'un liant.

8. Matelas selon la revendication 6, dans lequel lesdites encoches transversales (20) sont des encoches obtenues par une découpe intermittente.

9. Matelas selon la revendication 6, dans lequel lesdites couches sont comprimées dans un ensemble unitaire.
